# FASCICULE DE BREVET EUROPEEN

(11) **EP 1 496 268 B1**
(45) Date de publication et mention de la délivrance du brevet: **05.04.2006**
(21) Numéro de dépôt: 04291466.3
(22) Date de dépôt: 11.06.2004
(51) Int. Cl.: F15B 15/19, F15B 15/24, B60R 22/195

(54) **Actionneur pyrotechnique à effet de poussée variable**
Pyrotechnischer Stellantrieb mit variabler Schubkraft
Pyrotechnical actuator with variable thrust

(30) Priorité: 10.07.2003 FR 0308476
(43) Date de publication de la demande: 12.01.2005
(73) Titulaire: PYROALLIANCE, 78130 Les Mureaux (FR)
(72) Inventeur: Borg, Evrard, 83110 Sanary (FR); D' Emmanuelle, Laurent, 83200 Toulon (FR); Laspesa, Eric, 83140 Six-Fours (FR); Nadeau, Jean-Paul, 83190 Ollioules (FR)
(74) Mandataire: Le Roux, Martine

(56) Documents cités:
- EP-A- 0 550 321
- DE-A- 3 817 042
- JP-A- 50 079 676

## Description

Le domaine technique de l'invention est celui des actionneurs pyrotechniques comprenant un piston et ayant pour fonction essentielle d'exercer une poussée pour déplacer un objet en faisant émerger le piston. Les actionneurs pyrotechniques selon l'invention sont particulièrement adaptés pour être utilisés dans des systèmes de sécurité mis en oeuvre dans des véhicules automobiles et destinés, par exemple, à amortir le déplacement de certaines pièces qui ont été mises en mouvement lors d'un choc mécanique du véhicule automobile avec un élément extérieur, comme par exemple une ceinture de sécurité, le bouclier avant du véhicule, la colonne de direction ou le capot du véhicule dans le cas d'une collision frontale entre le véhicule et un piéton.

Les actionneurs pyrotechniques faisant intervenir un piston ont déjà fait l'objet de plusieurs demandes de brevet.

On peut citer le brevet EP 0 550 321 qui décrit un vérin pyrotechnique à course amortie pouvant être utilisé dans tout type de système d'absorption d'énergie. Ce vérin comporte un générateur de gaz pyrotechnique, un piston, une chambre de combustion de matières pyrotechniques et une chambre de contre-pression ainsi qu'une chambre intermédiaire comprise en ladite chambre de combustion et une extrémité du piston. Un canal relie la chambre intermédiaire à la chambre de contre-pression. Les gaz émis par le générateur mettent sous pression la chambre intermédiaire pour s'opposer au mouvement du piston et ainsi amortir sa course, une partie desdits gaz étant acheminée par le canal vers la chambre de contre-pression.

La demande de brevet FR 2 824 875 concerne un actionneur pyrotechnique possédant un corps, un piston, et une rondelle de retenue dudit piston dans ledit corps. Suivant la position initiale du piston dans le corps, l'actionneur peut, soit exercer une poussée sur un objet en faisant émerger ledit piston dudit corps, soit libérer une pièce mécanique en faisant rentrer le piston dans ledit corps.

Les actionneurs pyrotechniques décrits dans ces deux brevets ont un fonctionnement nominal caractérisé par un déplacement d'amplitude constante du piston, engendrant donc un effet unique sur les pièces ou objets destinés à interagir avec lesdits actionneurs. Les actionneurs pyrotechniques selon l'invention font intervenir un dispositif mécanique de régulation de pression dans la chambre de coulissement du piston permettant de maîtriser l'amplitude de déplacement dudit piston. De cette manière, les actionneurs pyrotechniques selon l'invention sont à effet de poussée variable ou même à course paramétrable et peuvent donc s'adapter à une pluralité de configurations nécessitant un déplacement plus où moins important du piston.

L'objet de la présente invention concerne un actionneur pyrotechnique comprenant un générateur de gaz pyrotechnique, une chambre de combustion et un piston pouvant se déplacer dans une chambre de coulissement sous l'effet desdits gaz, caractérisé en ce que ledit actionneur comprend un dispositif d'obturation mis en oeuvre après le déclenchement dudit actionneur pour, d'une part, fermer la chambre de coulissement et, d'autre part, assurer la dépressurisation de la chambre de combustion.

En effet, l'amplitude de déplacement du piston dans la chambre de coulissement est liée au niveau de pression atteint dans ladite chambre. L'obturation de cette chambre fige le piston dans une position déterminée. Une fois cette fermeture assurée, les gaz s'accumulent alors dans la chambre de combustion, de façon inconsidérée, avec un risque d'éclatement non négligeable. Il est donc nécessaire d'assurer la dépressurisation de la chambre de combustion le plus rapidement possible après l'obturation de la chambre de coulissement.

Avantageusement, le dispositif d'obturation est autonome et peut être déclenché à partir d'une centrale de commande.

Le découplage du déclenchement du dispositif d'obturation avec celui du déclenchement de l'actionneur contribue à accroître la souplesse d'utilisation dudit actionneur en permettant une intervention libre de l'utilisateur au moment qu'il juge le plus opportun.

De façon préférentielle, le dispositif d'obturation est inclus dans la chambre de combustion et est au contact de la chambre de coulissement.

Selon un mode de réalisation préféré, le dispositif d'obturation est constitué d'une pièce tiroir apte à se déplacer sous l'effet d'un moteur dans une enceinte de coulissement.

Selon une particularité de ce mode de réalisation, le moteur est un générateur de gaz pyrotechnique.

Selon un mode de réalisation préféré de l'invention, le générateur de gaz pyrotechnique est muni d'un système d'allumage et d'une charge pyrotechnique génératrice de gaz.

Selon une autre particularité, le déplacement de la pièce tiroir s'effectue selon un axe perpendiculaire à celui du déplacement du piston.

Selon une première variante de réalisation, l'enceinte de coulissement est munie d'un évent, l'enceinte de coulissement et la chambre de combustion étant isolées l'une de l'autre par un voile de matière. De cette manière, l'enceinte de coulissement et la chambre de combustion ne communiquent pas entre elles, et ladite enceinte constitue un espace ouvert sur l'extérieur par l'intermédiaire de l'évent.

Selon une particularité de cette première variante, la pièce tiroir est creuse et présente une extrémité coupante, de sorte que le déplacement de ladite pièce dans l'enceinte de coulissement entraîne d'abord la rupture du voile de matière, puis, simultanément, l'obturation de la chambre de coulissement du piston et la mise en communication de la chambre de combustion avec l'enceinte de coulissement. De façon plus précise, l'extrémité coupante de la pièce tiroir vient au contact du voile de matière puis le transperce, tandis que la partie creuse de la pièce tiroir devient un conduit qui assure le passage entre la chambre de combustion et l'enceinte de coulissement. L'obturation de la chambre de coulissement est réalisée par l'intermédiaire d'une partie de la paroi latérale de la pièce tiroir.

Selon une deuxième variante de réalisation, la chambre de combustion possède au moins un évent débouchant sur l'extérieur dudit actionneur de sorte que le dispositif d'obturation, qui initialement obture ledit évent et permet la communication entre la chambre de coulissement et la chambre de combustion, se déplace pour venir obturer la chambre de coulissement et libérer l'évent pour évacuer les gaz de la chambre de combustion.

Selon une particularité de cette deuxième variante de réalisation, la pièce tiroir est traversée par un canal reliant initialement la chambre de combustion à la chambre de coulissement, ladite pièce étant apte à se déplacer dans l'espace de coulissement sous l'effet du moteur, de manière à ce que le canal relie la chambre de combustion à l'extérieur de l'actionneur au niveau de l'évent.

Selon une troisième variante de réalisation, la chambre de combustion possède une zone de fragilisation, de sorte que le dispositif d'obturation qui initialement permet la communication entre la chambre de coulissement et la chambre combustion se déplace pour venir obturer la chambre de coulissement et provoquer l'ouverture de la chambre de combustion au niveau de sa zone de fragilisation.

Selon une particularité de cette troisième variante, la pièce tiroir est creuse et présente une extrémité coupante, de sorte que le déplacement de ladite pièce dans l'enceinte de coulissement entraîne l'obturation de la chambre de coulissement et provoque, par impact mécanique, la rupture de la zone de fragilisation pour évacuer les gaz en provenance du générateur vers l'extérieur dudit actionneur. Dans cette variante, une fois que la chambre de coulissement est obturée, la pièce creuse fait office de conduit pour acheminer les gaz de la chambre de combustion vers l'extérieur de l'actionneur.

Selon une quatrième variante de réalisation, la chambre de combustion possède un opercule calibré apte à se rompre au-delà d'une pression seuil pour évacuer les gaz vers l'extérieur de l'actionneur.

Préférentiellement, le piston présente un corps prolongé par une tige, le diamètre dudit corps étant sensiblement inférieur à celui de la chambre de coulissement.

Selon un mode de réalisation préféré de l'invention, l'actionneur comporte un dispositif anti-retour empêchant le mouvement de retour du piston vers l'intérieur de la chambre de coulissement.

Selon un mode de réalisation préféré de l'invention, la chambre de coulissement est située entre le dispositif d'obturation et le corps du piston.

Selon l'invention, l'actionneur peut comprendre des moyens de résistance au mouvement du piston créé sous l'effet des gaz. Selon une particularité, ces moyens de résistance sont constitués d'un ressort disposé autour de la tige du piston. En plaçant des moyens de résistance au mouvement du piston, on obtient alors un actionneur à course paramétrable. L'effort nécessaire pour déplacer le piston est connu et est fonction de la constante de raideur du ressort interne à l'actionneur.

Les actionneurs pyrotechniques selon l'invention, présentent l'avantage d'être autonomes et d'avoir un encombrement réduit grâce à une grande simplicité de conception. Ils peuvent donc être facilement insérés dans n'importe quel type de dispositif ou d'objet nécessitant les fonctions requises par de tels actionneurs. Ils présentent, de plus tous les avantages liés à l'utilisation de charges pyrotechniques, à savoir : fiabilité due à la maîtrise de l'allumage, encombrement réduit dû à la petite taille des charges pyrotechniques, et grande variabilité des effets due à la diversité des compositions pyrotechniques pouvant être retenues pour ces actionneurs. Enfin, l'utilisation de charges pyrotechniques permet un allumage séquentiel parfaitement maîtrisé entre l'actionneur et le dispositif d'obturation.

On donne ci-après la description détaillée d'un mode de réalisation préféré de l'invention en se référant aux figures 1 à 5B.

La figure 1A est une vue en coupe axiale longitudinale d'un actionneur pyrotechnique selon un premier mode de réalisation de l'invention n'ayant pas encore fonctionné.

La figure 1B est le dispositif d'absorption de la figure 1A mais après avoir fonctionné.

La figure 2A est une vue en coupe axiale longitudinale d'un actionneur pyrotechnique selon un deuxième mode de réalisation de l'invention n'ayant pas encore fonctionné.

La figure 2B est le dispositif d'absorption de la figure 2A mais après avoir fonctionné.

La figure 3A est une vue en coupe axiale longitudinale d'un actionneur pyrotechnique selon un troisième mode de réalisation de l'invention n'ayant pas encore fonctionné.

La figure 3B est le dispositif d'absorption de la figure 3A mais après avoir fonctionné.

La figure 4 est une vue en coupe axiale longitudinale d'un actionneur pyrotechnique selon un quatrième mode de réalisation de l'invention n'ayant pas encore fonctionné.

Les figures 5A et 5B représentent deux modes de réalisation distincts d'un dispositif anti-retour adapté sur l'actionneur pour empêcher le mouvement du piston en sens inverse.

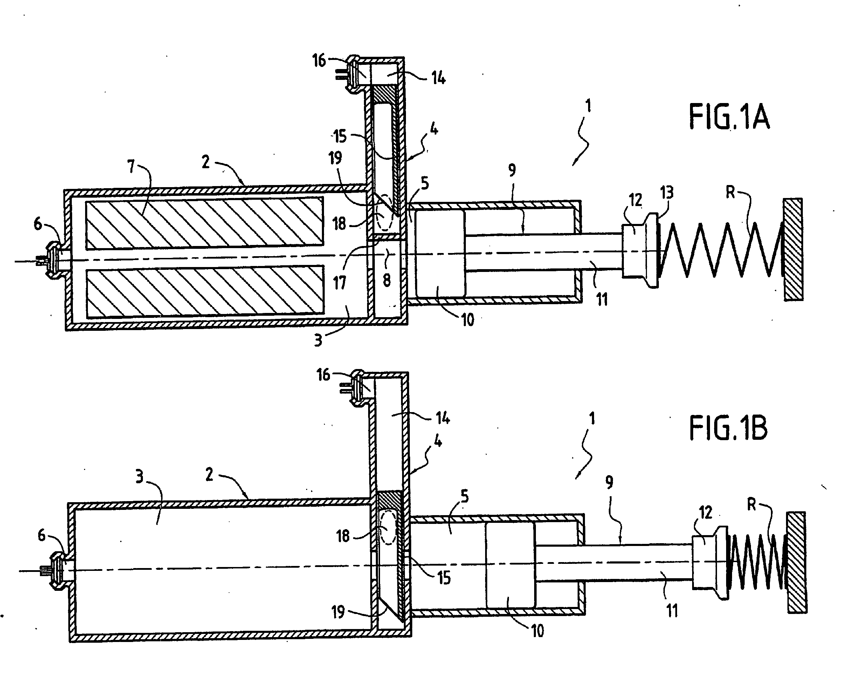

L'actionneur (1, 1a, 1b, 1c) pyrotechnique selon l'invention est destiné à exercer un effet de poussée contre une pièce extérieure. La résistance exercée par cette pièce extérieure est matérialisée sur les figures 1A à 4 par un ressort R fixé sur une plaque et placé en opposition au mouvement du piston 9 de l'actionneur (1, 1a, 1b, 1c) selon l'invention, décrit ci-dessous

En se référant aux figures 1A à 4, un actionneur pyrotechnique (1, 1a, 1b, 1c) selon l'invention est constitué d'un corps creux 2 délimitant trois parties distinctes en continuité les unes des autres : une chambre de combustion 3 prolongée par un dispositif d'obturation 4, lui-même prolongé par une chambre de coulissement 5. La chambre de combustion 3, qui est cylindrique, possède à l'une de ses extrémités un système d'allumage 6 électropyrotechnique et loge un générateur de gaz pyrotechnique 7. L'autre extrémité de ladite chambre 3 présente une ouverture débouchant par l'intermédiaire d'un passage 8 sur la chambre de coulissement 5 qui a aussi une forme cylindrique et dans laquelle est logé un piston 9 comportant un corps cylindrique 10 prolongé par une tige centrale 11 de plus faible diamètre. Le corps 10 du piston 9 a un diamètre sensiblement inférieur à celui du diamètre de la paroi interne de la chambre de coulissement 5, de sorte que ledit piston 9 peut coulisser de façon étanche dans ladite chambre 5. Des joints d'étanchéité peuvent être prévus sur le piston 9 pour obtenir une étanchéité parfaite. La chambre de coulissement 5 présente à l'une de ses extrémités une ouverture, de laquelle émerge l'extrémité libre de la tige centrale 11 du piston 9, ladite extrémité libre étant recouverte par un bouchon 12 présentant une face circulaire plane 13. L'axe de révolution de la chambre de combustion 3 est confondu avec l'axe de révolution de la chambre de coulissement 5. Le passage 8 reliant la chambre de combustion 3 à la chambre de coulissement 5 est partiellement délimité par un dispositif d'obturation (4, 4a, 4b, 4c) ayant la forme d'un cylindre creux dans lequel est logée une pièce tiroir (15, 15a, 15b, 15c).

Le dispositif d'obturation (4, 4a, 4b, 4c) présente un coude permettant de définir deux parties rectilignes, perpendiculaires entre elles. La première partie comporte à son extrémité libre un système d'allumage électropyrotechnique secondaire 16, et la deuxième partie, qui comprend ladite pièce tiroir (15, 15a, 15b, 15c) définit une enceinte de coulissement (14, 14a, 14b, 14c) pour ladite pièce tiroir (15, 15a, 15b, 15c). L'axe de l'enceinte de coulissement (14, 14a, 14b, 14c) est perpendiculaire à l'axe de la chambre de combustion 3 et à celui de la chambre de coulissement 5.

Préférentiellement, l'actionneur (1, 1a, 1b, 1c, 1d) comporte un dispositif anti-retour empêchant le mouvement de retour du piston 9 vers l'intérieur de la chambre de coulissement 5. Selon l'invention, une fois que, sous la pression des gaz présents dans la chambre de coulissement 5, le piston 9 a atteint une position déterminée, grâce au dispositif anti-retour, il ne peut plus coulisser en sens inverse, c'est-à-dire vers l'intérieur de la chambre de coulissement 5. En référence à la figure 5B, ce dispositif anti-retour pourra être constitué par exemple de billes 100 logées dans une partie du piston 9. Lors d'un retour du piston 9 vers l'intérieur de la chambre de coulissement, les billes 100 suivent un profil tronconique 101 formé sur la paroi latérale du piston 9 et viennent ainsi frotter contre la paroi interne 50 du cylindre délimitant la chambre de coulissement 5 du piston 9. Les billes 100 permettent ainsi d'éviter le recule du piston 9 vers l'intérieur de la chambre de coulissement 5 et de stopper le piston 9 dans la position déterminée par la pression des gaz présents dans la chambre de coulissement 5. Selon une variante de réalisation représentée en figure 5A, le dispositif anti-retour, est constitué d'une rondelle 110 crantée enfilée autour de la tige 11 du piston 9, et logée dans une gorge 51 annulaire formée sur la paroi interne 50 du cylindre délimitant la chambre de coulissement 5 du piston 9. La rondelle 110 a une forme convergeant suivant le sens de poussée du piston 9. Le diamètre de l'orifice central de la rondelle est déterminé de manière à ce que la rondelle 110 soit en contact avec la tige 11 du piston 9. Lorsque le piston se déplace dans le sens de la flèche sur la figure 5A pour exercer une poussée, la tige 11 coulisse par rapport à la rondelle 110 et s'extrait ainsi de l'actionneur. Lors d'un mouvement en sens inverse, la rondelle 110 maintenue dans la gorge 51 est sollicité vers l'intérieur et grâce à sa convergence bloque le retour du piston 9 vers l'intérieur de la chambre de coulissement 5.

Les premières étapes de fonctionnement d'un actionneur pyrotechnique (1, 1a, 1b, 1c) selon l'invention, présentées ci-dessous, sont identiques pour tous les modes de réalisation décrits ci-dessous en référence aux figures 1A à 4.

Une impulsion électrique de déclenchement parvient au système d'allumage 6 électropyrotechnique qui est alors activé et initie le générateur de gaz pyrotechnique 7.

Les gaz émis par le générateur 7 parviennent à la chambre de coulissement 5 par l'intermédiaire du passage 8, ladite chambre 5 étant alors mise sous pression. Au-delà d'une pression seuil dans ladite chambre 5, fonction de la raideur du ressort R, le piston 9 amorce un déplacement. Au cours de cette phase de déplacement et sur ordre d'une centrale de commande qui envoie au bout d'un temps prédéterminé une impulsion électrique au système d'allumage 16 du dispositif d'obturation (4, 4a, 4b, 4c) ledit dispositif (4, 4a, 4b, 4c) se déclenche, provoquant le déplacement de la pièce tiroir (15, 15a, 15b, 15c) dans l'enceinte de coulissement (14, 14a, 14b, 14c) sous l'effet des gaz émis par ledit système d'allumage 16.

Dans la suite de la description, seules certaines pièces qui ont été modifiées structurellement entre les différents modes de réalisation, prennent une nouvelle référence pour chaque mode de réalisation décrit.

Selon un premier mode de réalisation de l'invention représenté en figures 1A et 1B, ladite enceinte 14 est séparée du passage 8 par l'intermédiaire d'un voile de matière 17 et possède un évent 18 débouchant sur l'extérieur dudit actionneur 1. Ladite enceinte 14 définit donc un espace ouvert séparé à la fois de la chambre de combustion 3 et de la chambre de coulissement 5 du piston 9. Selon ce premier mode de réalisation, la pièce tiroir 15 est constituée par une pièce cylindrique creuse présentant une ouverture sur sa paroi latérale et comportant une extrémité ouverte, coupante et biseautée 19. La pièce tiroir 15 est placée dans l'enceinte de coulissement 14 de façon à ce que son extrémité coupante se retrouve en regard du voile de matière 17.

Selon le premier mode de réalisation, l'extrémité coupante 19 de ladite pièce 15 engendre la rupture du voile de matière 17, établissant une communication entre la chambre de combustion 3 et l'enceinte de coulissement 14 par l'intermédiaire de la pièce tiroir 15 qui crée ainsi un nouveau passage. Simultanément à cette mise en communication, la pièce 15 obture, grâce à une partie de sa paroi latérale, la chambre de coulissement 5. Les gaz émis par le générateur pyrotechnique 7 situé dans la chambre de combustion 3 ne pénètrent plus dans la chambre de coulissement 5 et sont alors déviés vers l'enceinte de coulissement 14 qui les évacuent vers l'extérieur par l'intermédiaire de son évent 18. La chambre de coulissement 5 n'étant plus alimentée en gaz, le piston 9 subissant de part et d'autre deux forces contraires cesse sa course et reste figé dans cette position. Le maintien du piston 9 en position figée est assuré également par un dispositif anti-retour tel que décrit ci-dessus en référence aux figures 5A ou 5B.

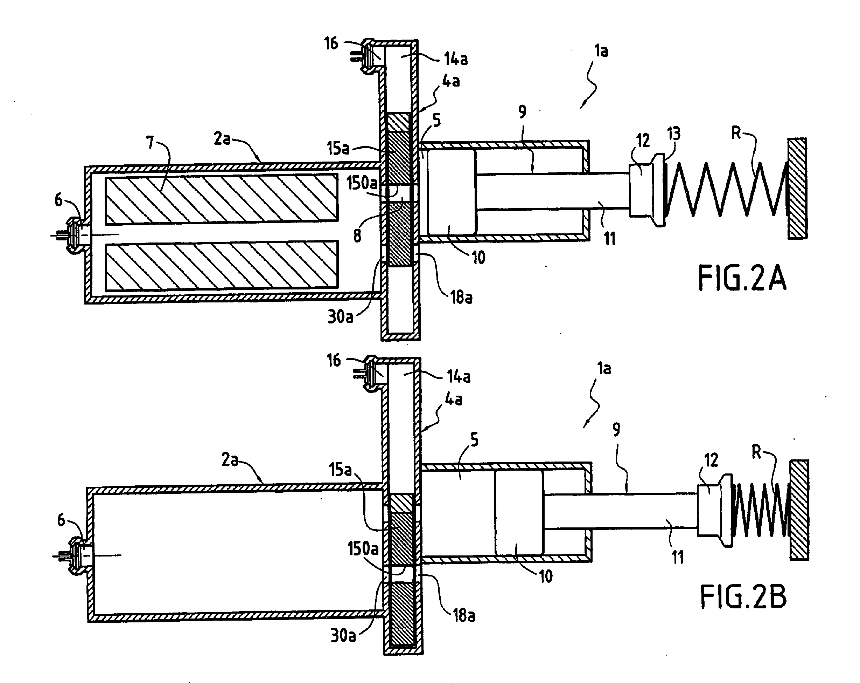

Selon un deuxième mode de réalisation de l'invention représenté en figures 2A et 2B, la pièce tiroir 15a est traversée transversalement par un canal 150a. En référence à la figure 2A, la pièce tiroir 15a est positionnée initialement de sorte que le canal 150a soit placé en regard du passage 8 reliant la chambre de coulissement 5 à la chambre de combustion 3 de manière à libérer ledit passage 8 pour laisser passer les gaz provenant de la chambre de combustion 3. Selon ce second mode de réalisation, la chambre de combustion 3 est percée d'un orifice 30a débouchant dans l'enceinte de coulissement 14a. La pièce tiroir 15a est positionnée initialement de manière à obturer ledit orifice 30a. Selon l'invention, comme représenté en figure 2A, initialement, les gaz issus de la chambre de combustion 3 ne peuvent donc passer que par le passage 8 ouvert par l'intermédiaire du canal 150 formé à travers la pièce tiroir 15a. Un autre orifice 18a est formé sur l'enceinte de coulissement 14 sensiblement en vis-à-vis de l'orifice 30a formé sur la chambre de combustion 3.

Selon ce deuxième mode de réalisation, le mouvement de la pièce tiroir 15a sous l'effet des gaz émis par le système d'allumage 16 provoque l'obturation du passage 8 entre la chambre de combustion 3 et la chambre de coulissement 5. La pièce tiroir 15a se déplace sous l'action des gaz jusqu'à une position de butée dans laquelle elle obture le passage 8 reliant la chambre de combustion 3 à la chambre de coulissement et dans laquelle son canal 150a se place en regard de l'orifice 30a formé sur la chambre de combustion 3 et de l'orifice 18a formé sur l'enceinte de coulissement 14 débouchant à l'extérieur de l'actionneur. De cette manière les gaz produits dans la chambre de combustion 3 qui ne peuvent plus rejoindre la chambre de coulissement 5 du fait de la fermeture du passage 8 par la pièce tiroir 15a, sont évacués vers l'extérieur de l'actionneur 1 par l'orifice 18a. L'orifice 30a formé sur la chambre de combustion 3, le canal 150a et l'orifice 18a débouchant à l'extérieur de l'actionneur forment ainsi un évent pour la chambre de combustion 3. Comme dans le premier mode de réalisation, l'obturation de la chambre de coulissement 5 fige la position du piston dans cette chambre 5. Le dispositif anti-retour permet au piston 9 de rester dans cette position même si une baisse de pression se produit dans la chambre de coulissement 5.

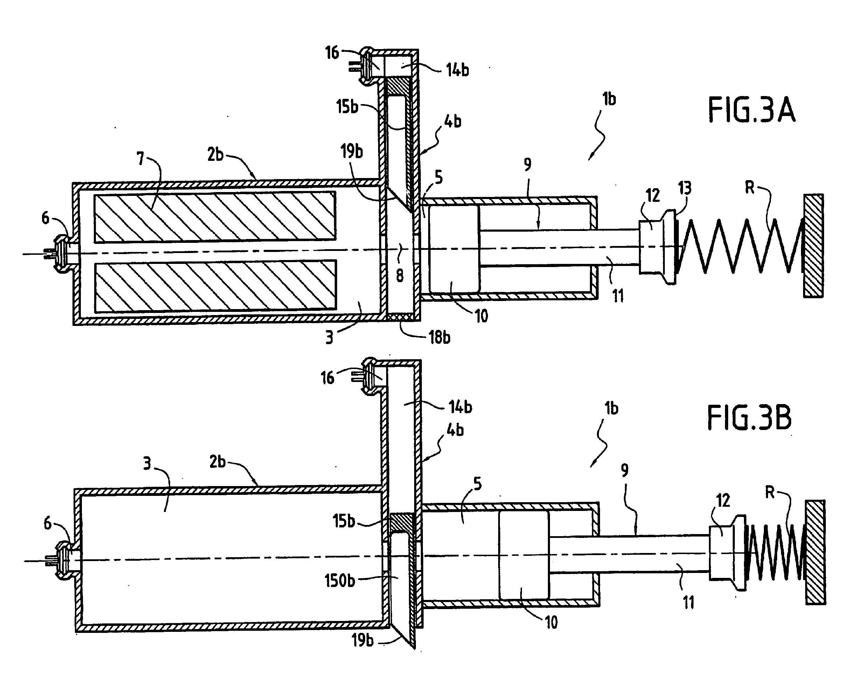

Selon un troisième mode de réalisation représenté en figures 3A et 3B, l'enceinte de coulissement 14b du dispositif d'obturation 4b en communication avec la chambre de combustion 3 comporte une zone de fragilisation 18b, constituée par exemple d'un opercule frangible, situé à l'extrémité de fin de course de la pièce tiroir 15b dans son enceinte de coulissement 14b. La pièce tiroir 15b du dispositif d'obturation 4b est du même type que celle intégrée à l'actionneur 1 selon le premier mode de réalisation. Cette pièce tiroir 15b est donc constituée par une pièce cylindrique creuse 150b présentant une ouverture sur sa paroi latérale et comportant une extrémité ouverte, coupante et biseautée 19b. La pièce tiroir 15b est placée dans l'enceinte de coulissement 14b de façon à ce que son extrémité coupante se retrouve en regard de la zone de fragilisation 18b. La pièce tiroir 15b, sous l'effet des gaz produits par le système d'allumage 16, se déplace et vient obturer grâce à une partie de sa paroi latérale, le passage 8 reliant la chambre de combustion 3 à la chambre de coulissement 5. Le déplacement de la pièce tiroir 15b se produit jusqu'à ce que l'extrémité coupante 19b de ladite pièce tiroir 15b vienne percer la zone de fragilisation 18b située par exemple en fin de course du coulissement de la pièce tiroir 15b. Une communication est alors établie entre la chambre de combustion 3 et l'extérieur de l'actionneur 1b par l'intermédiaire de la pièce tiroir 15b dont la partie creuse 150b forme un conduit déviant les gaz vers le trou formé après la rupture de la zone de fragilisation 18b. La chambre de coulissement 5 n'étant plus alimentée en gaz, la force générée par la pression des gaz dans la chambre de coulissement 5 et la force de résistance créée par le ressort R s'équilibrent, le piston 9 cesse alors sa course et reste figé dans cette position. Un dispositif anti-retour peut permettre d'assurer le maintien du piston 9 dans cette position.

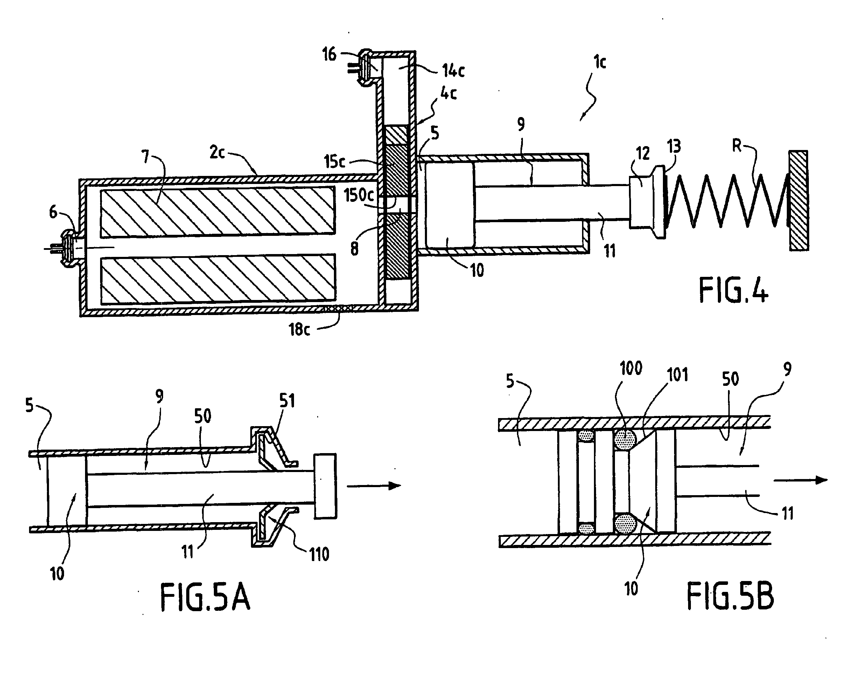

Selon un quatrième mode de réalisation représenté en figure 4, la pièce tiroir 15c est similaire à celle décrite ci-dessus en référence au deuxième mode de réalisation. La pièce tiroir 15c est donc une pièce pleine traversée par un canal 150c. Initialement, la pièce tiroir 15c est positionnée de sorte que son canal 150c soit placé en regard du passage 8 formé entre la chambre de combustion 3 et la chambre de coulissement 5. Ainsi, les gaz émis par le générateur pyrotechnique 7 peuvent rejoindre la chambre de coulissement 5 et permettent de faire avancer le piston 9 dans la chambre de coulissement 5.

Selon ce quatrième mode de réalisation, le corps 2c (figure 4) de l'actionneur 1c comporte au niveau de la chambre de combustion 3 un opercule 18c calibré apte à se rompre au-delà d'une pression seuil régnant dans la chambre de combustion 3. Selon ce quatrième mode de réalisation, la pièce tiroir 15c, sous l'action des gaz émis par le système d'allumage 16 du dispositif d'obturation 4c, se déplace et vient obturer le passage 8 entre la chambre de combustion 3 et la chambre de coulissement, empêchant toute entrée des gaz à l'intérieur de la chambre de coulissement 5. La force générée par la pression des gaz dans la chambre de coulissement 5 et la force de résistance créée par le ressort R s'équilibrent et le piston 9 se fige dans cette position. Un dispositif anti-retour tel que décrit ci-dessus en référence aux figures 5A et 5B peut être adapté sur l'actionneur 1c pour éviter un recul du piston 9. Le générateur 7 continue de produire des gaz qui sont maintenus dans la chambre de combustion 3. La pression augmente donc dans la chambre de combustion 3 et au-delà d'une pression seuil dans la chambre de combustion 3, l'opercule 18c calibré se rompt, mettant ainsi en communication la chambre de combustion 3 et l'extérieur de l'actionneur 1c. Les gaz présents dans la chambre de combustion sont ainsi évacués vers l'extérieur par le trou formé sur le corps de l'actionneur après la rupture de l'opercule 18c calibré.

L'actionneur pyrotechnique tel que décrit ci-dessus en référence aux figures 1A à 4 est à effet de poussée variable. La quantité de gaz envoyée dans la chambre de coulissement fige le piston dans une position déterminée. Toutefois l'amplitude de déplacement du piston est fonction entièrement de la résistance de la pièce sur laquelle la poussée est effectuée. Selon l'invention, il est possible d'obtenir un actionneur à course paramétrable en intégrant directement des moyens de résistance au déplacement du piston de l'actionneur. Il s'agira par exemple de disposer un ressort autour de la tige du piston. La constante de raideur de ce ressort étant connue, l'amplitude de déplacement du piston ne sera plus uniquement dépendante de la résistance de la pièce sur laquelle la poussée est effectuée.

## Revendications

1. Actionneur pyrotechnique (1, 1a, 1b, 1c) comprenant un générateur de gaz pyrotechnique (7), une chambre de combustion (3) et un piston (9) pouvant se déplacer dans une chambre de coulissement (5) sous l'effet desdits gaz, **caractérisé en ce que** ledit actionneur (1, 1a, 1b, 1c) comprend un dispositif d'obturation (4, 4a, 4b, 4c) mis en oeuvre après le déclenchement dudit actionneur (1, 1a, 1b, 1c) pour, d'une part, fermer la chambre de coulissement (5) et, d'autre part, assurer la dépressurisation de la chambre de combustion (3).

2. Actionneur selon la revendication 1, **caractérisé en ce que** le dispositif d'obturation (4, 4a, 4b, 4c) est autonome et peut être déclenché à partir d'une centrale de commande.

3. Actionneur selon la revendication 1, **caractérisé en ce que** le dispositif d'obturation (4, 4a, 4b, 4c) est inclus dans la chambre de combustion (3) et est au contact de la chambre de coulissement (5).

4. Actionneur selon la revendication 1, **caractérisé en ce que** le dispositif d'obturation (4, 4a, 4b, 4c) est constitué d'une pièce tiroir (15, 15a, 15b, 15c) apte à se déplacer sous l'effet d'un moteur dans une enceinte de coulissement (14, 14a, 14b, 14c).

5. Actionneur selon la revendication 4, **caractérisé en ce que** le moteur est un générateur (16) de gaz pyrotechnique.

6. Actionneur selon la revendication 4, **caractérisé en ce que** le déplacement de la pièce tiroir (15, 15a, 15b, 15c) dans l'enceinte de coulissement (14, 14a, 14b, 14c) s'effectue selon un axe perpendiculaire à celui du déplacement du piston (9).

7. Actionneur selon la revendication 4, **caractérisé en ce que** l'enceinte de coulissement (14) est munie d'un évent (18), l'enceinte de coulissement (14) et la chambre de combustion (3) étant isolées l'une de l'autre par un voile de matière (17).

8. Actionneur (1) selon la revendication 7, **caractérisé en ce que** la pièce tiroir (15) est creuse et présente une extrémité coupante (19), de sorte que le déplacement de ladite pièce (15) dans l'enceinte de coulissement (14) entraîne d'abord la rupture du voile de matière (17), puis, simultanément, l'obturation de la chambre de coulissement (5) du piston (9) et la mise en communication de la chambre de combustion (3) avec l'enceinte de coulissement (14).

9. Actionneur (1a) selon la revendication 4, **caractérisé en ce que** la chambre de combustion 3 possède au moins un évent débouchant sur l'extérieur dudit actionneur (1a) de sorte que le dispositif d'obturation (4a), qui initialement obture ledit évent et permet la communication entre la chambre de coulissement (5) et la chambre de combustion (3), se déplace pour venir obturer la chambre de coulissement (5) et libérer l'évent pour évacuer les gaz de la chambre de combustion (3).

10. Actionneur (1a) selon la revendication 9, **caractérisé en ce que** la pièce tiroir (15a) est traversée par un canal (150a) reliant initialement la chambre de combustion (3) à la chambre de coulissement (5), ladite pièce (15a) étant apte à se déplacer dans l'espace de coulissement (14a) sous l'effet du moteur, de manière à ce que le canal (150a) relie la chambre de combustion à l'extérieur de l'actionneur (1a) au niveau de l'évent.

11. Actionneur (1b) selon la revendication 4, **caractérisé en ce que** la chambre de combustion (3) possède une zone de fragilisation (18b), de sorte que le dispositif d'obturation (4b) qui initialement permet la communication entre la chambre de coulissement (5) et la chambre de combustion (3) se déplace pour venir obturer la chambre de coulissement (5) et provoquer l'ouverture de la chambre de combustion (3) au niveau de sa zone de fragilisation (18b).

12. Actionneur (1b) selon la revendication 11, **caractérisé en ce que** la pièce tiroir (15b) est creuse et présente une extrémité coupante (19b), de sorte que le déplacement de ladite pièce (15b) dans l'enceinte de coulissement (14b) entraîne l'obturation de la chambre de coulissement (5) et provoque, par impact mécanique, la rupture de la zone de fragilisation (18b) pour évacuer les gaz en provenance du générateur (7) vers l'extérieur dudit actionneur (1b).

13. Actionneur (1c) selon la revendication 4, **caractérisé en ce que** la chambre de combustion (3) possède un opercule (18c) calibré apte à se rompre au-delà d'une pression seuil pour évacuer les gaz vers l'extérieur de l'actionneur (1c).

14. Actionneur (1, 1a, 1b, 1c) selon la revendication 1, **caractérisé en ce que** le piston (9) présente un corps (10) prolongé par une tige (11), le diamètre dudit corps (10) étant sensiblement inférieur à celui de la chambre de coulissement (5).

15. Actionneur selon la revendication 1, **caractérisé en ce qu'**il comprend un dispositif anti-retour empêchant le mouvement de retour du piston (9) vers l'intérieur de la chambre de coulissement (5).

16. Actionneur selon la revendication 14, **caractérisé en ce qu'**il intègre des moyens de résistance au mouvement du piston (9) créé sous l'effet des gaz.

17. Actionneur selon la revendication 16, **caractérisé en ce que** ces moyens de résistance sont constitués d'un ressort disposé autour de la tige (11) du piston (9).

## Patentansprüche

1. Pyrotechnischer Stellantrieb (1, 1a, 1b, 1c) mit einem pyrotechnischen Gasgenerator (7), einer Brennkammer (3) und einem Kolben (9), der sich in einer Gleitkammer (5) unter der Wirkung der Gase verschieben kann, **dadurch gekennzeichnet, dass** der Stellantrieb (1, 1a, 1b, 1c) eine Verschlussvorrichtung (4, 4a, 4b, 4c) aufweist, die nach dem Auslösen des Stellantriebs (1, 1a, 1b, 1c) eingesetzt wird, um einerseits die Gleitkammer (5) zu schließen und anderseits die Druckminderung in der Brennkammer (3) zu gewährleisten.

2. Stellantrieb nach Anspruch 1, **dadurch gekennzeichnet, dass** die Verschlussvorrichtung (4, 4a, 4b, 4c) autonom ist und ausgehend von einer Steuerzentrale ausgelöst werden kann.

3. Stellantrieb nach Anspruch 1, **dadurch gekennzeichnet, dass** die Verschlussvorrichtung (4, 4a, 4b, 4c) in der Brennkammer (3) enthalten ist und mit der Gleitkammer (5) in Kontakt steht.

4. Stellantrieb nach Anspruch 1, **dadurch gekennzeichnet, dass** die Verschlussvorrichtung (4, 4a, 4b, 4c) aus einem Schubteil (15, 15a, 15b, 15c) besteht, das in der Lage ist, sich unter der Wirkung eines Antriebs in einem Gleitraum (14, 14a, 14b, 14c) zu verschieben.

5. Stellantrieb nach Anspruch 4, **dadurch gekennzeichnet, dass** der Antrieb ein pyrotechnischer Gasgenerator (16) ist.

6. Stellantrieb nach Anspruch 4, **dadurch gekennzeichnet, dass** die Verschiebung des Schubteils (15, 15a, 15b, 15c) im Gleitraum (14, 14a, 14b, 14c) gemäß einer Achse lotrecht zu derjenigen des Kolbens (9) erfolgt.

7. Stellantrieb nach Anspruch 4, **dadurch gekennzeichnet, dass** der Gleitraum (14) mit einem Entlüftungsloch (18) versehen ist, wobei der Gleitraum (14) und die Brennkammer (3) durch eine Materialabdeckung (17) voneinander isoliert sind.

8. Stellantrieb (1) nach Anspruch 7, **dadurch gekennzeichnet, dass** das Schubteil (15) ausgehöhlt ist und ein schneidendes Ende (19) aufweist, so dass die Verschiebung des Teils (15) im Gleitraum (14) zunächst das Reißen der Materialabdeckung (17) und dann gleichzeitig den Verschluss der Gleitkammer (5) des Kolbens (9) und die Verbindung der Brennkammer (3) mit dem Gleitraum (14) bewirkt.

9. Stellantrieb (1a) nach Anspruch 4, **dadurch gekennzeichnet, dass** die Brennkammer (3) mindestens ein Entlüftungsloch aufweist, das nach außerhalb des Stellantriebs (1a) mündet, so dass die Verschlussvorrichtung (4a), die ursprünglich das Entlüftungsloch verdeckt und die Verbindung zwischen der Gleitkammer (5) und der Brennkammer (3) ermöglicht, sich verschiebt, um die Gleitkammer (5) zu verschließen und das Entlüftungsloch freizugeben, um die Gase aus der Brennkammer (3) abzuführen.

10. Stellantrieb (1a) nach Anspruch 9, **dadurch gekennzeichnet, dass** das Schubteil (15a) von einem Kanal (150a) durchquert wird, der ursprünglich die Brennkammer (3) mit der Gleitkammer (5) verbindet, wobei das Teil (15a) in der Lage ist, sich unter der Wirkung des Antriebs im Gleitraum (14a) zu verschieben, damit der Kanal (150a) die Brennkammer in Höhe des Entlüf tungslochs mit der Außenumgebung des Stellantriebs (1a) verbindet.

11. Stellantrieb (1b) nach Anspruch 4, **dadurch gekennzeichnet, dass** die Brennkammer (3) eine Schwächungszone (18b) aufweist, so dass die Verschlussvorrichtung (4a), die ursprünglich die Verbindung zwischen der Gleitkammer (5) und der Brennkammer (3) ermöglicht, sich verschiebt, um die Gleitkammer (5) zu verschließen und die Öffnung der Brennkammer (3) in Höhe ihrer Schwächungszone (18b) zu bewirken.

12. Stellantrieb (1b) nach Anspruch 11, **dadurch gekennzeichnet, dass** das Schubteil (15b) hohl ist und ein schneidendes Ende (19b) aufweist, damit die Verschiebung des Teils (15b) im Gleitraum (14b) den Verschluss der Gleitkammer (5) nach sich zieht und durch mechanischen Aufprall das Reißen der Schwächungszone (18b) bewirkt, um die vom Generator (7) kommenden Gase nach außerhalb des Stellantriebs (1b) abzuführen.

13. Stellantrieb (1c) nach Anspruch 4, **dadurch gekennzeichnet, dass** die Brennkammer (3) eine kalibrierte Abdeckfolie (18c) aufweist, die jenseits eines Druckschwellwerts reißen kann, um die Gase nach außerhalb des Stellantriebs (1c) abzuführen.

14. Stellantrieb (1, 1a, 1b, 1c) nach Anspruch 1, **dadurch gekennzeichnet, dass** der Kolben (9) einen Körper (10) aufweist, der von einer Stange (11) verlängert wird, wobei der Durchmesser des Körpers (10) im Wesentlichen geringer ist als derjenige der Gleitkammer (5).

15. Stellantrieb nach Anspruch 1, **dadurch gekennzeichnet, dass** er eine Rücklaufsperrvorrichtung aufweist, die die Rücklaufbewegung des Kolbens (9) ins Innere der Gleitkammer (5) verhindert.

16. Stellantrieb nach Anspruch 14, **dadurch gekennzeichnet, dass** er Mittel zum Widerstand gegen die Bewegung des Kolbens (9) aufweist, die unter der Wirkung der Gase erzeugt wird.

17. Stellantrieb nach Anspruch 16, **dadurch gekennzeichnet, dass** diese Widerstandsmittel aus einer Feder bestehen, die um die Stange (11) des Kolbens (9) herum angeordnet ist.

## Claims

1. Pyrotechnic actuator (1, 1a, 1b, 1c) comprising a pyrotechnic gas generator (7), a combustion chamber (3) and a piston (9) which can be displaced in a sliding chamber (5) under the effect of the said gases, **characterised in that** the said actuator (1, 1a, 1b, 1c) comprises a shutter device (4, 4a, 4b, 4c) which is applied after the said actuator (1, 1a, 1b, 1c) is triggered, firstly in order to close the sliding chamber (5) and secondly to ensure that the combustion chamber (3) is depressurised.

2. Actuator according to claim 1, **characterised in that** the shutter device (4, 4a, 4b, 4c) is autonomous and can be triggered from a control unit.

3. Actuator according to claim 1, **characterised in that** the shutter device (4, 4a, 4b, 4c) is included in the combustion chamber (3) and is in contact with the sliding chamber (5).

4. Actuator according to claim 1, **characterised in that** the shutter device (4, 4a, 4b, 4c) consists of a slide part (15, 15a, 15b, 15c) which can be displaced under the effect of a motor unit in a sliding enclosure (14, 14a, 14b, 14c).

5. Actuator according to claim 4, **characterised in that** the motor unit is a pyrotechnic gas generator (16).

6. Actuator according to claim 4, **characterised in that** the displacement of the slide part (15, 15a, 15b, 15c) in the sliding enclosure (14, 14a, 14b, 14c) takes place along an axis which is perpendicular to that of the displacement of the piston (9).

7. Actuator according to claim 4, **characterised in that** the sliding enclosure (14) is provided with a vent (18), the sliding enclosure (14) and the combustion chamber (3) being isolated from one another by a web of material (17).

8. Actuator (1) according to claim 7, **characterised in that** the slide part (15) is hollow and has a cutting end (19), such that the displacement of the said part (15) in the sliding enclosure (14) gives rise firstly to rupture of the web of material (17), then, simultaneously, to shutting of the sliding chamber (5) of the piston (9) and putting into communication of the combustion chamber (3) with the sliding enclosure (14).

9. Actuator (1a) according to claim 4, **characterised in that** the combustion chamber (3) has at least one vent which opens onto the exterior of the said actuator (1a) such that the shutter device (4a), which initially shuts the said vent and permits communication between the sliding chamber (5) and the combustion chamber (3), is displaced in order to shut the sliding chamber (5) and release the vent in order to discharge the gases from the combustion chamber (3).

10. Actuator (1a) according to claim 9, **characterised in that** through the slide part (15a) there passes a channel (150a) which initially connects the combustion chamber (3) to the sliding chamber (5), the said part (15a) being able to be displaced in the sliding space (14a) under the effect of the motor unit, such that the channel (150a) connects the combustion chamber to the exterior of the actuator (1a) at the level of the vent.

11. Actuator (1b) according to claim 4, **characterised in that** the combustion chamber (3) has an area of embrittlement (18b), such that the shutter device (4b) which initially permits the communication between the sliding chamber (5) and the combustion chamber (3) is displaced in order to shut the sliding chamber (5) and to give rise to the opening of the combustion chamber (3) at the level of its area of embrittlement (18b).

12. Actuator (1b) according to claim 11, **characterised in that** the slide part (15b) is hollow and has a cutting end (19b), such that the displacement of the said part (15b) in the sliding enclosure (14b) gives rise to shutting of the sliding chamber (5) and, by mechanical impact, causes the rupture of the area of embrittlement (18b) in order to discharge the gases obtained from the generator (7), to the exterior of the said actuator (1b).

13. Actuator (1c) according to claim 4, **characterised in that** the combustion chamber (3) has a calibrated cap (18c) which can break when a threshold pressure is exceeded, in order to discharge the gases to the exterior of the actuator (1c).

14. Actuator (1, 1a, 1b, 1c) according to claim 1, **characterised in that** the piston (9) has a body (10) which is extended by a rod (11), the diameter of the said body (10) being substantially smaller than that of the sliding chamber (5).

15. Actuator according to claim 1, **characterised in that** it comprises a non-return device which prevents the movement of return of the piston (9) to the interior of the sliding chamber (5).

16. Actuator according to claim 14, **characterised in that** it incorporates means for resistance to the movement of the piston (9) created under the effect of the gases.

17. Actuator according to claim 16, **characterised in that** these means for resistance consist of a spring which is disposed around the rod (11) of the piston (9).
